## Europäisches Patentamt

## European Patent Office

## Office européen des brevets

(19)

(11) Veröffentlichungsnummer: **0 249 829**
**A2**

(12)

# EUROPÄISCHE PATENTANMELDUNG

(21) Anmeldenummer: **87108159.2**

(22) Anmeldetag: **05.06.87**

(51) Int. Cl.⁴: **C 01 B 33/32, C 11 D 3/08**

(30) Priorität: **13.06.86 DE 3620010**

(43) Veröffentlichungstag der Anmeldung: **23.12.87**
**Patentblatt 87/52**

(84) Benannte Vertragsstaaten: **AT BE CH DE ES FR GB IT LI NL**

(71) Anmelder: **Henkel Kommanditgesellschaft auf Aktien, Postfach 1100 Henkelstrasse 67, D-4000 Düsseldorf-Holthausen (DE)**

(72) Erfinder: **Jacobs, Jochen, Dr., Am Acker 20, D-5600 Wuppertal 1 (DE)**
Erfinder: **Kruse, Hans, Am Hallenbad 44, D-4052 Korschenbroich (DE)**

(54) Verfahren zur Herstellung von Natriummetasilikat-Agglomeraten.

(57) Rieselfähige, Natriummetasilikat enthaltende Granulate werden in der Weise hergestellt, daß man wasserfreies Natriummetasilikat mit Wasser oder einer wasserhaltigen Lösung unter granulierenden Bedingungen behandelt, wobei die Temperatur des zu granulierenden Gutes während der Agglomeration und im Anschluß daran im Bereich von 45°C bis 75°C gehalten wird. Die Menge des zugesetzten Wassers beträgt 3,5 bis 15 Gew.-% bezogen auf das fertige Granulat.

0249829

**Henkel** KGaA
TFP/Patente
Dr. Fu/we

P a t e n t a n m e l d u n g

D 7171 EP

"Verfahren zur Herstellung von Natriummetasilikat-Agglomeraten"

Wesentlicher Bestandteil maschineller Reinigungsmittel
für Geschirr ist Natriummetasilikat. Dieses enthält als
wasserfreies Produkt normalerweise Staubanteile, die wegen ihrer hohen Alkalität die Atemwege angreifen. Eine Absiebung des Feinanteils kann das Staubproblem nur vorübergehend lösen, da sich bei Lagerung durch Verwittern erneut
Staubanteile bilden. Zusätzlich ist festzustellen, daß
durch die wieder auftretenden Feinanteile auch das Einspülverhalten der Reinigungsmittel negativ beeinflußt wird.
Auch sind die nach Absiebung des Feinkornes erhaltenen
Schüttgewichte ungünstig für die Herstellung von Reinigern,
die bekanntlich möglichst Schüttgewichte im Bereich von
etwa 1 000 g/l aufweisen sollten.

Bei der Herstellung handelsüblicher maschineller Reinigungsmittel für Geschirr wird das Metasilikat im allgemeinen zusammen mit Pentanatriumtriphosphat (STP), Soda,
Wasserglas und Wasser agglomeriert. Dieses Agglomerat
hat etwa das gewünschte Litergewicht und besitzt auch
keine störenden Staubanteile mehr. Es kann jedoch infolge
von nichtkristallin gebundenem,zur Wanderung zwischen
Triphosphat und Metasilikat neigendem Wasser zu Verklumpungen und stark schwankenden Einspüleigenschaften kommen.

Durch Vermischung von Natriummetasilikat-Agglomeraten
mit einem Kristallwasser enthaltenden STP-Agglomerat
können diese Probleme beseitigt werden. Da es sich

./2

hier um Mischprodukte handelt, ist zusätzlich eine größere
Rezepturflexibilität gegeben.

Die EP 0 100 700 (A 1) beschreibt granuliertes Natriummetasilikat, das einen inhomogenen Agglomerat-Kornaufbau
dergestalt aufweist, daß ein Kern von wasserfreiem Natriummetasilikat von einer Schicht des Natriummetasilikat-
Pentahydrat umgeben ist. Die Herstellung solcher Metasilikat-Granulate ist vergleichsweise aufwendig. Die Erfindung geht von der Aufgabenstellung aus, ein vereinfachtes Verfahren zur Herstellung von Natriummetasilikat-
Agglomeraten zur Verfügung zu stellen, das ein für die
Anwendung in verbesserten Reinigungsmittelgemischen der
geschilderten Art geeignetes Eigenschaftsprofil aufweist.
Die Erfindung betrifft weiterhin Reinigungsmittelgemische
der hier betroffenen Art, die durch einen Gehalt an erfindungsgemäß hergestelltem Natriummetasilikat-Agglomerat
gekennzeichnet sind.

Gegenstand der Erfindung ist dementsprechend in einer
ersten Ausführungsform das Verfahren zur Herstellung von
rieselfähig granuliertem Natriummetasilikat durch Behandlung von wenigstens weitgehend wasserfreiem Natriummesilikat mit einer beschränkten Menge eines wasserhaltigen
Mediums unter den Bedingungen einer agglomerierenden Vermischung, wobei dieses Verfahren dadurch gekennzeichnet
ist, daß man zur Herstellung eines Produktes hohen Schüttgewichtes und guter Lagerstabilität die Agglomeration derart Temperatur-gesteuert vornimmt, daß die Produkt-
Temperatur des zu granulierenden Gutes bei der Agglomeration im Bereich von etwa 45 bis 75 $^{o}$C liegt, woraufhin
gewünschtenfalls das gebildete Granulat zur Verringerung
der Oberflächenfeuchte bei Produkt-Temperaturen nicht
oberhalb 75 $^{o}$C nachbehandelt wird. In der bevorzugten
Ausführungsform der Erfindung wird die Temperatur des Gutes bei der Agglomeration im Bereich von etwa 50 bis 65 °C gehalten.

Die Lehre der Erfindung beruht auf der überraschenden Feststellung, daß das Einhalten sehr bestimmter Temperaturbedingungen bei der Agglomeration von Natriummetasilikat mit geringen Mengen an Wasser bzw. wäßriger Phase zur Herstellung von stabilen verwitterungsfesten Agglomeraten des gewünschten Eigenschaftsprofiles führt. Beeinflußt wird durch diese Steuerung offenbar insbesondere die Art der Wasserbindung im Agglomerat sowie dessen Kornzusammensetzung. Diese wiederum steuern die anwendungstechnischen Eigenschaften des Fertigproduktes, insbesondere das Einspülverhalten und das Schüttgewicht in die erwünschte Richtung.

Zur Einstellung und Regulierung der Temperatur des zu agglomerierenden Gutes während des Agglomerationsvorganges sind - neben bzw. unter Berücksichtigung der anfallenden Hydratationswärme - insbesondere zwei Verfahrensmaßnahmen geeignet, die auch miteinander verbunden werden können. Man kann durch Wahl und Vorgabe der Temperatur des zugegebenen Wassers bzw. der eingesetzten wäßrigen Phase Einfluß auf die Gut-Temperatur beim Granulationsprozeß nehmen. Ebenso ist es aber auch möglich, eine Temperatur-Steuerung über die Intensität und Dauer des über das Mischwerkzeug eingebrachten Energiebetrages vorzunehmen.

Das erfindungsgemäße Verfahren arbeitet in seiner bevorzugten Ausführungsform mit Mischern, die die intensive Durchmischung des zu granulierenden Gutes sicherstellen.

Geeignet sind insbesondere Mischer mit rotierenden Werkzeugen und insbesondere solche Mischer dieser Art, die zu einem hohen Energieeintrag in das zu mischende Gut befähigt sind. Dabei kann sowohl diskontinuierlich in einem Chargen-Mischer als auch kontinuierlich bei Auswahl entsprechener Geräte gearbeitet werden. Beispiele für einen diskontinuierlich arbeitenden Chargen-Mischer sind beispielsweise der Pflugscharmischer der Firma Lödige und das Schnellmischer-System Forberg. Kontinuierlich arbeitende Mischeinrichtungen dieser Art sind beispielsweise in einem Lödige-Befeuchtungsmischer verwirklicht. Grundsätzlich sind allerdings alle Mischgeräte geeignet, mit denen der Agglomerationsvorgang bewerkstelligt werden kann.

Anhand beispielhaft gewählter konkreter Zahlenangaben sei diese Ausführungsform der Temperatur-Steuerung durch die beiden genannten Parameter verdeutlicht:

Bei diskontinuierlicher Herstellung der Agglomerate im 130 l-Lödigemischer stellen sich bei einer Zugabe von bis zu 10 % kaltem Wasser (15 - 20 °C) und einer maximalen Nachmischzeit von 15 Sekunden Feuchtgranulat-Temperaturen von 45 - 50 °C ein. Das angefallene Produkt bedarf jetzt in der Regel noch einer Nachbehandlung zur Absenkung des Oberflächenfeuchtegehaltes der Granulatkörner, um zu einem zuverlässig schüttfähigem Produkt zu gelangen. Eine solche Nachbehandlung kann zum Beispiel in einer Wirbelschicht erfolgen und erweist sich als wünschenswert selbst bei Agglomeraten mit einem Wasseranteil von nur 4 %.

/5

Eine Erhöhung der Produkttemperatur auf über 50 °C kann
entweder durch Verlängerung der Nachmischzeit und/oder
durch Einsatz von heißem Wasser oder wäßrigen Lösungen
erfolgen. Bei diesen höheren Produkttemperaturen ist eine
deutliche Verbesserung der Schüttfähigkeit, des Lagerverhaltens und tendentiell des Einspülverhaltens auch ohne
nachfolgende Behandlung zur Absenkung der Oberflächenfeuchte des Agglomerates festzustellen.

Andererseits hat bei Zugabe von heißem Wasser oder von
heißen wäßrigen Metasilikatlösungen - wie es im nachfolgenden noch beschrieben wird - die Nachmischzeit keinen
oder kaum einen Einfluß auf die Fließfähigkeit des primär
anfallenden Agglomerates. Hier stellt sich die erfindungsgemäß gewünschte Produkttemperatur auch schon bei kurzen
Mischzeiten im Granulationsvorgang ein. Demgegenüber
können mit kaltem Wasser hergestellte, zum Verklumpen
neigende feuchte Granulate durch eine verlängerte Nachmischzeit in ihren Eigenschaften (Schüttfähigkeit, Einspülbarkeit, Lagerfähigkeit) verbessert werden, da durch
diese verlängerte Nachmischzeit eine Steigerung der Granulattemperatur auf über 50 °C bewirkt wird. Agglomerate,
die beispielsweise mit 10 % kaltem Wasser mit Nachmischzeiten von wenigstens 90 Sekunden in einem 130 l-Lödigemischer hergestellt wurden, zeigen bei Lagerung in geschlossenen Gefäßen bei Temperaturen von 30 °C keine
Neigung zum Zusammenbacken.

Die Temperatur während der Agglomeratbildung beeinflußt
offenbar die bei der Hydratation des eingesetzten wasserfreien Metasilikats entstehenden Metasilikat-Kristallphasen,
die ihrerseits wiederum das Eigenschaftsbild des Fertigproduktes beeinflussen. So tritt beispielsweise bei
Temperaturen unter 50 $^{o}$C im Agglomerat keine durch Röntgenbeugung feststellbare Bildung definierter kristallwasserhaltiger Metasilikate auf. Im Temperaturbereich
zwischen 52 und 65 $^{o}$C (Produkttemperatur) wurde die gewünschte Bildung kristallwasserhaltiger Metasilikatphasen
festgestellt, wobei sowohl Hexahydrat als auch Pentahydrat neben Hexahydrat als auch Pentahydrat alleine
beobachtet wurden. Die Bindung des Wassers als Kristallwasser wirkt sich sehr positiv auf die Rieselfähigkeit
aus, die Neigung der Produkte zur Verklumpung nimmt auch
ohne Wirbelschichtnachbehandlung deutlich ab. Tendenziell
wurde beobachtet, daß bei Verwendung kalten Wassers als
Granulierflüssigkeit, wobei die gewünschte Temperatur
durch die Nachmischzeit eingestellt wurde, bevorzugt
Hexahydrat gebildet wird. Mit heißem Wasser als Granulierflüssigkeit wurde in der Regel neben Hexahydrat auch
Pentahydrat gefunden. Mit heißen Metasilikatlösungen
wird die Bildung von Pentahydrat bevorzugt.

Tendentiell sind solche Agglomerate am besten einspülbar,
in denen als wasserhaltige Kristallphase das Metasilikat-
Pentahydrat nachgewiesen werden kann. Das gilt sowohl für
das agglomerierte Metasilikat als solches als auch für
seine Abmischungen mit anderen Standardkomponenten alkalischer Reinigungsmittel der hier betroffenen Art, insbesondere mit STP-Prähydrate mit einem Wassergehalt von
beispielsweise 5 - 20 %, bevorzugt 6 - 8 % bzw. 15 bis 20 %.

Zur Agglomeration von wasserfreiem oder praktisch wasserfreiem feinstteiligem Natriummetasilikat - das beispielsweise aus der Schmelze oder hydrothermalen Verfahren gewonnen worden ist - werden üblicherweise etwa 3,5 - 15
Gewichtsprozent Wasser und bevorzugt etwa 5 - 10 Gew.-%
Wasser eingesetzt. Diese Zahlenangaben beziehen sich

/7

dabei auf die Summe des insgesamt eingesetzten Natriummetasilikats und des Wassers. Das Wasser kann dabei auch
in Form wäßriger Lösungen von Metasilikat und/oder von
einzuarbeitenden Hilfsstoffen eingesetzt werden, wie es
im folgenden noch geschildert wird.

Der Wasserzusatz kann einmalig oder auch portionsweise
erfolgen. Eine Steuerung des Granulationsergebnisses ist
dabei im erfindungsgemäßen Sinn auch durch die Art und
Weise dieses Wasserzusatzes zu erreichen, wie aus den
folgenden beispielhaften Angaben ersichtlich wird:

Ohne daß es zu Verklumpungen im Mischer kommt, ist beispielsweise eine Einsatzmenge von bis zu 10 Gew.-% Wasser
zur Bildung von Agglomeraten bei einmaligem Wasserzusatz
möglich. Bei Verwendung von kaltem Wasser (15 - 20 °C)
tritt nach Nachmischzeiten von über 90 Sekunden eine Zerstörung der dann bereits trockenen, rieselfähigen Granulate ein. Bei erneuter Wasserzugabe werden bis zu insgesamt 14 % Wasser enthaltende Agglomerate gebildet.
Eine Verbesserung des Einspülverhaltens wird dadurch
allerdings nicht erreicht. Ein vergleichbarer Effekt
tritt andererseits bei Verwendung von heißem Wasser als
Granulierflüssigkeit auch bei langen Nachmischzeiten nicht
auf.

Bei Verwendung von heißem Wasser oder heißer wäßriger
Metasilikatlösung kann es bei Bildung von Metasilikat-
Hexahydrat bei einem Wasseranteil von 8 % oder weniger
ohne Nachbehandlung bei Lagerung in geschlossenen Gefäßen
bei Temperaturen von 20 °C im Granulat zu lockeren Zusammenbackungen kommen, die sich durch leichtes Schütteln wieder
zerstören lassen. Wird die Granulation so gesteuert, daß
sich die Natriummetasilikat-Pentahydrat-Kristalle im
Produkt bilden, können bei einem Einsatz von 8 % Wasser oder weniger ohne nachfolgende Nachbehandlung in strömender Luft unter gleichen Lagerbedingungen
nicht zusammenbackende Produkte erhalten werden.

Das Einspülverhalten und das Litergewicht von - bezüglich
der Wasserbindung - vergleichbaren Produkten mit Wassergehalten zwischen 8 bis 10 % ist in etwa gleich und befriedigend. Produkte mit einem Wassergehalt von $\leqq 6$ % zeigen
demgegenüber tendentiell ein schlechteres Einspülverhalten.

Die Agglomeration wird erfindungsgemäß bevorzugt so gelenkt, daß das Agglomerat ein Kornspektrum im Bereich
von etwa 0,1 bis 2,0 mm aufweist. Besonders geeignet sind
Agglomerate mit engem Kornspektrum und geringem Feinanteil
unter 0,4 mm. Sie weisen das günstigste Einspülverhalten
auf. So ist beispielsweise ein Produkt mit einer Kornverteilung zwischen 0,8 bis 1,6 mm deutlich schneller einspülbar als gröberes oder feineres Produkt. Aus produktionstechnischen Gründen können Teilchengrößen von 0,4 -
1,6 mm besonders geeignet sein. Soweit bei der Herstellung
der Agglomerate gewisse Anteile an Grobkorn anfallen, werden diese abgetrennt, zerkleinert und dem Produkt beigemischt. Die ebenfalls abgetrennten staubförmigen bzw.
feinkörnigen Anteile werden in den Granulierprozeß zurückgeführt.

Die Schüttdichte der Agglomerate sollte in der bevorzugten
Ausführungsform wenigstens etwa 950 g/l und insbesondere
wenigstens etwa 1 000 g/l betragen.

Als flüssiges Agglomerierhilfsmittel kann anstelle des
reinen Wassers auch die Verwendung von wäßrigen Lösungen
geeigneter Zusatzstoffe in Betracht kommen. In erster Linie
ist als Zusatzstoff in der wäßrigen Phase hier Natriummetasilikat zu nennen. Metasilikatlösungen mit einem
Feststoffgehalt bis zu etwa 60 Gew.-% und vorzugsweise
entsprechende Lösungen mit Feststoffgehalten von

/9

5 bis 60 Gew.-% können in dieser Ausführungsform insbesondere in Betracht kommen. Besonders geeignet kann hier die Verwendung von Metasilikatlösungen eines Feststoffgehaltes von etwa 20 - 40 Gew.-% sein.

Neben oder an Stelle des Metasilikates können andere geeignete Komponenten in dieser wäßrigen Phase mit in das Agglomerat eingetragen werden. Geeignet sind insbesondere andere übliche Bestandteile der letztlich hier betroffenen alkalischen Reinigungsmittel insbesondere für den Einsatzzweck des Geschirrspülens. Genannt seien hier beispielsweise Soda, Wasserglas oder auch STP. Schließlich ist es aber auch möglich, das in solchen Reinigungsmischungen in geringen Konzentrationen mitverwendete Paraffinöl über diese wäßrige Phase emulgiert in das Granulat einzuführen. Neben oder anstelle der Zumischung dieser Komponenten gelöst oder emulgiert in der wäßrigen Phase kann auch ihre getrennte Zugabe zum zu agglomerierenden Gut erfolgen, wie in der folgenden beispielhaften Darstellung ersichtlich ist:

In einem diskontinuierlich betriebenen Lödige-Mischer wird festes Natriummetasilikat vorgelegt und mit beschränkten Mengen - beispielsweise bis zu 15 Gew.-% Soda vermischt. Dann erfolgt die Zugabe von Paraffinöl - beispielsweise 0,1 bis 1 Gew.-% - , Wasserglas - beispielsweise 1 - 5 Gewichtsprozent und Wasser. Zur Bildung der Agglomerate ist eine Nachmischzeit von einigen Minuten mit intensiver Zerteilung des Mischgutes erforderlich. Im Granulat hat sich eine Produkttemperatur von 52 °C eingestellt. Um letztlich aus diesem Granulat ein lagerfähiges Produkt zu erhalten, wird das angefangene Produkt der Nachbehandlung mit heißer Luft in einer Wirbelschicht unterworfen. Auch auf diese
Weise werden überwiegend Metasilikat enthaltende Agglomerate erhalten, die staubfrei sind, ein hohes Litergewicht und eine geeignete Einspülzeit im Testgerät bei
sehr gutem Einspülverhalten aufweisen. Auch die Abmischung mit hydratisiertem Triphosphat führt zu gut
einspülbaren Produkten.

Die Dauer der temperaturgesteuerten Agglomerationsbehandlung im Sinne der Erfindung beträgt im allgemeinen etwa
1 - 10 Minuten, vorzugsweise etwa 1,5 - 5 Minuten. Wird
unter den gewählten Verfahrensbedingungen ein Agglomerat
erhalten, dessen Oberflächenfeuchte noch so hoch ist, daß
mit Zusammenbackungen beim Lagern zu rechnen ist, so
schließt sich die bereits erwähnte Nachbehandlungsstufe
zur Absenkung der Oberflächenfeuchte an. Diese Nachbehandlung wird im allgemeinen in strömender Luft, vorzugsweise in einem erwärmten Luftstrom durchgeführt, beispielsweise kann durch eine entsprechende Nachbehandlung im
Wirbelbett die Absenkung der Oberflächenfeuchte auf den
gewünschten Bereich erfolgen. Es ist erfindungsgemäß
weiterhin bevorzugt, die Temperaturbedingungen für das
agglomerierte Gut auch während dieser Nachbehandlungsstufe in dem zahlenmäßigen Bereich zu halten, wie er für
die Stufe der Agglomeration mit wäßriger Phase beschrieben worden ist. Geeignet ist also insbesondere auch hier
der Produkt-Temperaturbereich von etwa 45 bis 75 $^{o}$C und
vorzugsweise von etwa 50 bis 65 $^{o}$C.

In der eingangs geschilderten weiteren Ausführungsform
der Erfindung sind hier streufähige, insbesondere körnige
Reinigungsmittel betroffen, die die erfindungsgemäß hergestellten Natriummetasilikat-Agglomerate in Abmischung
mit weiteren Wirkstoff-Komponenten solcher vorzugsweise
stark alkalischer Reinigungsmittel aufweisen. Zu nennen

0249829

ist hier in erster Linie das STP insbesondere in granulierter prähydratisierter Form. Die im Einzelfall gewählten
Mischungsverhältnisse entsprechen den Angaben des Standes
der Technik.

/12

B e i s p i e l e

Beispiel 1

Bei laufenden Mischwerkzeugen (Pflugscharen und Zerhacker) wurden im mit 50 °C warmem Wasser vorgewärmten Lödige Pflugscharmischer vom Typ FM 130 D innerhalb von 3 Minuten zu 18,2 kg wasserfreiem Metasilikat 1,8 kg Wasser gleichmäßig zugegeben. Nach der Wasserzugabe wurden weitere 15 Sekunden lang nachgemischt und anschließend die Charge in ein Auffanggefäß abgelassen. Das erhaltene Agglomerat war 45 °C warm und mußte, da es oberflächig feucht war und zum Zusammenbacken neigte, drei Minuten lang in einer Wirbelschicht mit Kaltluft nachbehandelt werden. Das Granulat war nun gut schüttfähig und neigte bei Lagerung in geschlossenen Gefäßen bei ca. 20 °C nicht zum Zusammenbacken. Röntgenographisch ließ sich keine Bildung eines kristallwasserhaltigen Metasilikates feststellen. Nach DIN 66 145 hatte es einen mittleren Teilchendurchmesser von 1,2 mm bei einer Steigung der RRSB-Geraden von n = 3,2. Das Litergewicht lag bei 1 190 g. Das erhaltene Agglomerat war innerhalb von 12 Minuten, eine Abmischung des Agglomerates im Verhältnis 1 : 1 mit einem mit 17 % Wasser hydratisiertem Na-Triphosphat in 6 Minuten in einer Haushaltsgeschirrspülmaschine vom Typ Miele G 503 S eingespült.

Beispiel 2

Bei laufenden Mischwerkzeugen (Pflugscharen und Zerhacker) wurden im mit 50 °C warmem Wasser vorgewärmten Lödige Pflugscharmischer vom Typ FM 130 D innerhalb von 3 Minuten zu 18 kg wasserfreiem Metasilikat 2 kg Wasser gleichmäßig zugegeben. Nach der Wasserzugabe wurden weitere zwei Minuten lang nachgemischt und anschließend die Charge in ein Auffanggefäß abgelassen. Das erhaltene Agglomerat war 53 °C warm, war gut schüttfähig und neigte bei Lagerung in geschlossenen Gefäßen nicht zum Zusammenbacken. Röntgenographisch wurde im Produkt ein Metasilikat mit 6 Kristallwasser nachgewiesen. Nach DIN 66 145 hatte es einen mittleren Teilchendurchmesser von 1,2 mm bei einer Steigung der RRSB-Geraden von 1,85. Das erhaltene Agglomerat hatte ein Litergewicht von 1 226 g und ließ sich in 10 Minuten in einer Miele Geschirrspülmaschine Typ G 503 S einspülen. Kornfraktionen kleiner 0,4 mm waren in 15 Minuten, 0,4 - 0,8 mm in 12 Minuten, 0,8 - 1,6 mm in 5,5 Minuten und Abmischungen des Agglomerates verschiedener Fraktionen mit einem mit 17 % Wasser hydratisiertem Na-Triphosphat im Verhältnis 1 : 1 in 4 - 5 Minuten einspülbar.

Beispiel 3

Bei laufenden Mischwerkzeugen (Pflugscharen und Zerhacker) wurden im mit 70 $^\circ$C warmem Wasser vorgewärmten
Lödige Pflugscharmischer Typ FM 130 D innerhalb von
1 Minute auf 27,6 kg wasserfreies Metasilikat 2,4 kg
80 $^\circ$C heißes Wasser gleichmäßig zugegeben. Nach einer
Nachmischzeit von 3 Minuten wurde das 56 $^\circ$C heiße Agglomerat in einen Auffangbehälter abgelassen. Es war gut
schüttfähig und neigte bei Lagerung im verschlossenen
Gefäß nicht zum Verklumpen. Röntgenographisch wurden im
Produkt ein Metasilikat mit 5 Kristallwasser nachgewiesen. Nach DIN 66 145 hatte das Agglomerat einen mittleren
Korndurchmesser von 1,1 mm bei einer Steigung der RRSB-
Geraden von 2,1. Das Litergewicht lag bei 1 140 g.
Die Einspülzeit des Produktes in einer Miele HGSM
Typ G 503 S betrug 6 Minuten, die einer Abmischung
mit einem mit 17 % Wasser hydratisiertem Na-Triphosphat
im Verhältnis 1 : 1 betrug 3,5 Minuten.

/15

Beispiel 4

Bei laufenden Mischwerkzeugen (Pflugscharen und Zerhacker) wurden im mit 60 °C warmem Wasser vorgewärmten Lödige Pflugscharmischer Typ FM 130 D innerhalb von 30 Sekunden auf 26 kg wasserfreies Metasilikat 4 kg einer 80 °C heißen 25 %igen Metasilikatlösung gleichmäßig zugegeben. Nach einer Nachmischzeit von 15 Sekunden wurde das 60 °C heiße Agglomerat in einen Auffangbehälter abgelassen. Es war gut schüttfähig und neigte bei Lagerung im verschlossenen Gefäß nicht zum Verklumpen. Röntgenographisch wurde im Produkt ein 5 Kristallwasser enthaltendes Metasilikat nachgewiesen. Nach DIN 66 145 hatte das 1 040 g/l schwere Agglomerat einen mittleren Korndurchmesser von 1,2 mm bei einer Steigung der RRSB-Geraden von 2,75. Die Einspülzeit des Produktes in eine Miele HGSM Typ G 503 S betrug 6 Minuten, die einer Abmischung mit einem mit 15 % Wasser hydratisiertem Na-Triphosphat im Verhältnis 1 : 1 betrug 3,5 Minuten.

/16

Patentansprüche

1. Verfahren zur Herstellung von rieselfähig granuliertem
Natriummetasilikat durch Behandlung von wenigstens weitgehend wasserfreiem Natriummetasilikat mit einer beschränkten Menge eines wasserhaltigen Mediums unter den
Bedingungen einer agglomerierenden Vermischung dadurch
gekennzeichnet, daß man zur Herstellung eines Produktes
hohen Schüttgewichtes und guter Lagerstabilität die
Agglomeration derart Temperatur-gesteuert vornimmt, daß
die Temperatur des zu granulierenden Gutes bei der Agglomeration im Bereich von etwa 45 bis 75 $^\circ$C gehalten wird,
woraufhin gewünschtenfalls das gebildete Granulat zur
Verringerung seiner Oberflächenfeuchte bei Produkt-
Temperaturen nicht oberhalb 75 $^\circ$C nachbehandelt wird.

2. Verfahren nach Anspruch 1 dadurch gekennzeichnet, daß
man die Temperatur des Gutes bei der Agglomeration im
Bereich von etwa 50 bis 65 $^\circ$C hält.

3. Verfahren nach Ansprüchen 1 und 2 dadurch gekennzeichnet, daß man die Temperatur des zu agglomerierenden Gutes über die Einsatztemperatur der wäßrigen Phase und/
oder über die Intensität und die Dauer des über das
Mischwerkzeug eingebrachten Energiebetrages steuert.

4. Verfahren nach Ansprüchen 1 bis 3 dadurch gekennzeichnet, daß man mit Mischern mit rotierenden Werkzeugen
und insbesondere mit solchen Mischern arbeitet, die
zu einem hohen Energieeintrag in das zu mischende
Gut befähigt sind.

5. Verfahren nach Ansprüchen 1 bis 4 dadurch gekennzeichnet, daß eine Nachtrocknung in strömender Luft, zum Beispiel in einem Wirbelbett erfolgt, wobei bevorzugt die Produkt-Temperaturen der Nachbehandlung denen der Agglomerationsstufe entsprechen.

6. Verfahren nach Ansprüchen 1 bis 5 dadurch gekennzeichnet, daß man das zu agglomerierende Gut mit etwa 3,5 bis 15 Gew.-% Wasser, vorzugsweise mit etwa 5 bis 10 Gew.-% Wasser behandelt - Gew.-% jeweils bezogen auf die Summe von Natriummetasilikat und wäßriger Phase.

7. Verfahren nach Ansprüchen 1 bis 6 dadurch gekennzeichnet, daß man als wäßrige Phase eine Natriummetasilikathaltige Lösung mit einem Gehalt an Natriummetasilikat von nicht mehr als etwa 60 Gew.-%, vorzugsweise im Bereich von etwa 5 - 60 Gew.-% und insbesondere im Bereich von etwa 20 - 40 Gew.-% einsetzt.

8. Verfahren nach Ansprüchen 1 bis 7 dadurch gekennzeichnet, daß man als wäßrige Phase Lösungen wasserlöslicher alkalischer Reinigungskomponenten, insbesondere Soda, Wasserglas und/oder Tripolyphosphat bzw. eine emulgiertes Paraffinöl enthaltende wäßrige Phase einsetzt.

9. Verfahren nach Ansprüchen 1 bis 8 dadurch gekennzeichnet, daß man Produkte eines Schüttgewichtes von wenigstens etwa 950 g/l insbesondere von wenigstens etwa 1 000 g/l herstellt.

/18

10. Verfahren nach Ansprüchen 1 bis 9 dadurch gekennzeichnet, daß man Agglomerate eines Kornspektrums
    von etwa 0,1 bis 2,0 mm, vorzugsweise im Bereich
    von etwa 0,4 bis 1,6 mm herstellt.

11. Verfahren nach Ansprüchen 1 bis 10 dadurch gekennzeichnet, daß man die Agglomeration und insbesondere
    ihre Temperatur und Dauer derart aufeinander abstimmt, daß im Agglomerat eine wasserhaltige Natriummetasilikat-Kristallphase mit 5 Kristallwasser nachweisbar ist.

12. Verfahren nach Ansprüchen 1 bis 11 dadurch gekennzeichnet, daß man die Dauer der Agglomerationsbehandlung auf etwa 1 bis 10 Minuten, vorzugsweise auf etwa
    1,5 bis 5 Minuten begrenzt.

13. Verwendung der nach den Ansprüchen 1 bis 12 herge-
    stellten Natriummetasilikat-Agglomerate als Mischungs-
    komponente in alkalischen Reinigern, insbesondere in
    streufähigen körnigen Reinigungsmitteln zum Beispiel
    für Geschirrspülmaschinen.